# FASCICULE DE BREVET EUROPEEN

(11) **EP 2 427 532 B1**
(45) Date de publication et mention de la délivrance du brevet: **04.07.2018**
(21) Numéro de dépôt: 10715896.6
(22) Date de dépôt: 04.05.2010
(51) Int. Cl.: C10B 7/10, C10C 5/00, C10B 53/02

(54) **PROCÉDÉ DE DENSIFICATION ÉNERGÉTIQUE D'UN PRODUIT SOUS FORME DE SOLIDES DIVISÉS, EN VUE DE L'OBTENTION D'HUILES PYROLYTIQUES À VOCATION ÉNERGÉTIQUE**
VERFAHREN ZUR ENERGIEVERDICHTUNG EINES MATERIALS IN FORM VON GETEILTEN FESTSTOFFEN IM HINBLICK AUF DEN ERHALT VON PYROLYSEÖLEN FÜR ENERGIEZWECKE
METHOD FOR THE ENERGY DENSIFICATION OF A MATERIAL IN THE FORM OF DIVIDED SOLIDS, WITH A VIEW TO OBTAINING PYROLYSIS OILS FOR ENERGY PURPOSES

(30) Priorité: 07.05.2009 FR 0902214
(43) Date de publication de la demande: 14.03.2012
(73) Titulaire: E.T.I.A.-Evaluation Technologique, Ingenierie et Applications, 60201 Compiègne Cedex (FR)
(72) Inventeur: LEPEZ, Olivier, F-60260 Lamorlaye (FR); SAJET, Philippe, F-60610 Lacroix Saint-Ouen (FR)
(74) Mandataire: Parzy, Benjamin Alain
(86) Numéro de dépôt international: PCT/EP2010/056051
(87) Numéro de publication internationale: WO 2010/128055

(56) Documents cités:
- WO-A2-2004/077966
- JP-A- 1 008 388
- INGRAM L ET AL: "Pyrolysis of wood and bark in an auger reactor: Physical properties and chemical analysis of the produced bio-oils" ENERGY AND FUELS JANUARY/FEBRUARY 2008 AMERICAN CHEMICAL SOCIETY US, vol. 22, no. 1, janvier 2008 (2008-01), pages 614-625, XP002561923
- ROI Alabama Operations LLC: "Demonstrating BioOil Technology for Poultry Litter Nutrient Management (Final Report)" INTERNET CITATION 28 juillet 2006 (2006-07-28), XP002561924 Extrait de l'Internet: URL:http://www.fppcinc.org/pdf/reports_ren ewableoilinternational.pdf [extrait le 2010-01-04]

## Description

La présente invention concerne la densification énergétique d'un produit sous forme divisés, en particulier une biomasse, en vue de l'obtention d'huiles pyrolytiques à vocation énergétique.

Pour les biomasses, il pourra s'agir de biomasses d'origine végétale ou de parties solides de boues de station d'épuration. Il pourra également s'agir de déchets industriels, en particulier des déchets polymériques (matières plastiques, caoutchoucs, ...).

### ARRIERE PLAN DE L'INVENTION

On connaît des dispositifs de traitement thermique de solides divisés, comprenant au moins un organe de transfert ayant au moins un axe longitudinal et une partie hélicoïdale montée pour tourner autour dudit axe longitudinal dans une enveloppe tubulaire, la partie hélicoïdale étant formée dans sa masse d'un matériau électriquement conducteur et étant reliée à une source d'alimentation en énergie électrique pour constituer un moyen de transfert chauffant. Un tel dispositif est illustré dans les documents WO-A-99/39549 et FR-A-2 892 888 de la demanderesse.

On connaît en variante des dispositifs de traitement à tube vibré également chauffé par effet Joule, comme illustré par exemple dans les documents FR-A-2 788 260 et FR-A-2 788 336.

Cependant, les dispositifs de ce type ne sont pas adaptés pour des traitements à des températures allant de 300°C à 850°C, comme c'est le cas dans le domaine de la pyrolyse où l'on souhaite maximiser la teneur en phase gazeuse, et ainsi optimiser les rendements de densification énergétique.

Pour de telles applications, la demanderesse a proposé de perfectionner le dispositif précité en prévoyant une enveloppe tubulaire dont les parois internes sont en matériau réfractaire, lesdites parois constituant alors elles-mêmes des moyens de chauffage par rayonnement de la masse de solides divisés qui progresse dans l'enveloppe tubulaire, les temps de séjour envisagés étant toujours de l'ordre de plusieurs dizaines de minutes, notamment du fait de la montée relativement lente du produit en température (de l'ordre de quelques dizaines de degrés par minute).

Dans tous les cas, les traitements connus de pyrolyse restent encore à faible rendement opératoire, et ils ne sont en particulier pas adaptés pour la pyrolyse d'une biomasse en vue de l'obtention d'huiles pyrolytiques à vocation énergétique.

Le dispositif des documents précités a par ailleurs également été utilisé dans un traitement de pyrolyse spécifiquement prévu dans un tout autre contexte, à savoir la production de fumées alimentaires, comme cela est décrit dans le document WO-A-2004/077966. Une telle installation ne présenterait aucun intérêt dans le cadre d'une application à la densification énergétique d'une biomasse en vue de l'obtention d'huiles pyrolytiques à vocation énergétique en raison du mauvais rendement d'huiles obtenues, lequel rendement pourrait atteindre tout au plus environ 40% d'huiles. De plus, la puissance électrique sert exclusivement à chauffer le produit à la température de pyrolyse, de sorte que le coût de production est très élevé.

On connaît par ailleurs d'autres installations de pyrolyse qui ont été conçues pour traiter des biomasses en lit fluidisé en les séchant afin d'augmenter leur pouvoir calorifique inférieur, avec un passage à contre-courant d'un mélange d'air et de sable chaud afin de réaliser un chauffage très rapide de la biomasse. Les conditions de température de la pyrolyse sont certes alors favorables pour la densification énergétique d'une biomasse, mais les installations concernées sont extrêmement complexes, et on ne peut en outre écarter l'inconvénient inhérent à la présence de particules de sable dans les huiles pyrolytiques obtenues, ce qui implique une filtration en aval de l'installation.

D'une façon générale, il apparaît actuellement difficile de mettre en oeuvre une pyrolyse de biomasse en vue de l'obtention d'huiles pyrolytiques à vocation énergétique en ayant à la fois les conditions opératoires favorables à une telle pyrolyse, un bon rendement de process, c'est-à-dire un rendement au moins égal à environ 65% d'huiles, et un coût de production raisonnable.

### OBJET DE L'INVENTION

L'invention a pour objet de proposer un procédé de densification énergétique d'un produit sous forme de solides divisés, en particulier une biomasse, en vue de l'obtention d'huiles pyrolytiques à vocation énergétique, ne présentant pas les inconvénients précités, c'est-à-dire capables à la fois de mettre en oeuvre des conditions opératoires favorables à la pyrolyse et d'obtenir des rendements de process élevés (entre 50% et 80% d'huiles), avec des valeurs de pouvoir calorifique inférieur (P.C.I) aussi élevées que possible (entre 4000 et 7000 kcal/kg), et ceci dans des conditions optimales au regard de la consommation d'énergie, de la pollution, et de la simplicité de mise en oeuvre.

### RESUME DE L'INVENTION

Le problème technique précité est résolu conformément à l'invention grâce à un procédé de densification énergétique d'un produit sous forme de solides divisés, en particulier une biomasse, en vue de l'obtention d'huiles pyrolytiques à vocation énergétique ayant des valeurs de pouvoir calorifique inférieur comprises entre 4000 et 7000 kilocalories par kilogramme, ledit procédé comportant les étapes successives suivantes :
- préconditionnement du produit par chauffage et séchage, afin de porter ledit produit à une température voisine de 100°C et à une humidité relative n'excédant pas environ 10 % dans un dispositif de préconditionnement ;
- pyrolyse du produit amené ensuite à circuler dans un réacteur de pyrolyse sensiblement hermétique, dont l'entrée est reliée de façon étanche à la sortie du dispositif de préconditionnement, ledit réacteur contenant au moins une vis de transfert ou un tube vibré chauffé par effet Joule, ledit produit étant progressivement chauffé jusqu'à une température comprise entre 300°C et 850°C avec une vitesse de montée en température de plusieurs centaines de degrés par seconde, la puissance du courant électrique traversant la vis de transfert ou le tube vibré pour assurer le chauffage par effet Joule étant régulée en fonction du produit pour maintenir le niveau thermique désiré pendant le temps de séjour dudit produit dans ledit réacteur ;
- extraction des gaz de pyrolyse en partie haute du réacteur en vue de leur condensation rapide dans un condenseur vertical; et
- récupération des huiles pyrolytiques en partie basse du condenseur vertical.

Ainsi, grâce au préconditionnement précité, le produit est idéalement préparé pour une pyrolyse parfaitement adaptée au traitement désiré, avec à la fois une montée en température qui est rapide et un temps de séjour dans le réacteur de pyrolyse qui est relativement court, le traitement thermique s'effectuant naturellement en l'absence d'oxygène, c'est-à-dire avec une teneur en oxygène restant inférieure à environ 5%. De plus, la régulation électrique en fonction du produit concerné, qui est simple à mettre en oeuvre, permet de minimiser considérablement la consommation d'énergie, car on se contente de maintenir le niveau thermique lors du traitement.

On pourra prévoir que le temps de séjour du produit dans le réacteur de pyrolyse est compris entre quelques secondes et quelques dizaines de minutes.

De préférence, avant l'étape de préconditionnement, le produit sous forme de solides divisés est stocké avec une granulométrie comprise entre 10 µm et 1mm, de préférence entre 100µm et 300 µm, et à une humidité relative comprise entre 1% et 12%, de préférence entre 5% et 10%. Grâce à la granulométrie fine, on est ainsi assuré d'avoir une cinétique rapide, et grâce à une humidité aussi faible que possible, on est assuré d'obtenir des huiles riches en pouvoir calorifique inférieur.

Avantageusement encore, l'extraction des gaz de pyrolyse s'effectue dans la dernière partie du réacteur par référence au sens de circulation du produit, avec un maintien en température jusqu'à leur arrivée dans le condenseur vertical. Ce maintien en température permet d'éviter de condenser trop tôt les goudrons contenus dans les gaz de pyrolyse.

De préférence alors, les gaz de pyrolyse sont refroidis rapidement dès leur entrée dans le condenseur vertical, par le passage desdits gaz entre des tubes dans lesquels circule un fluide réfrigérant à une température d'environ 0°C. En particulier, les gaz de pyrolyse passent entre un faisceau de tubes verticaux, de façon que le ruissellement des condensats réalise un nettoyage desdits tubes.

Le procédé comporte de préférence également l'évacuation, en partie haute du condenseur vertical, des fractions non condensables des gaz de pyrolyse, en vue de la combustion rapide desdites fractions dans un foyer de combustion, ou en variante en vue de leur recyclage dans un séchoir à air chaud assurant le préconditionnement du produit. En particulier, l'évacuation des fractions non condensables s'effectue par extraction forcée, via un dévésiculeur.

Avantageusement encore, le procédé comporte également l'extraction, en sortie du réacteur et en partie basse de celui-ci, du coke résiduel, en vue du refroidissement dudit coke, en l'absence d'oxygène, dans un refroidisseur étanche. En particulier, le coke résiduel est refroidi progressivement dans le refroidisseur étanche, pour sortir de celui-ci sous forme de biochar ou analogue à une température n'excédant pas environ 50°C. La description divulgue également une installation de mise en oeuvre d'un procédé de densification énergétique d'un produit sous forme de solides divisés, en particulier une biomasse, présentant l'une au moins des caractéristiques précitées, ladite installation étant remarquable en ce qu'elle comporte :
- un dispositif de préconditionnement permettant de chauffer et sécher le produit à des valeurs prescrites de température et d'humidité relative ;
- un réacteur de pyrolyse, dont l'entrée est reliée de façon étanche à la sortie du dispositif de préconditionnement, ledit réacteur étant équipé d'au moins une vis de transfert ou un tube vibré chauffé par effet Joule, des moyens étant prévus pour réguler en fonction du produit la puissance du courant électrique traversant la vis de chauffage ou le tube vibré pour assurer le chauffage par effet Joule ;
- un condenseur vertical, dont l'entrée est reliée à un piquage de sortie du réacteur de pyrolyse, permettant de condenser les fractions condensables d'une partie des gaz de pyrolyse, la sortie en partie basse dudit condenseur permettant de récupérer les huiles pyrolytiques obtenues.

Dans un premier mode d'exécution, le dispositif de préconditionnement comporte une auge à double enveloppe parcourue par un fluide chaud, et une vis de transfert montée pour tourner dans ladite auge à une vitesse constante et régulée, ladite auge étant équipée, en partie haute, d'une trémie d'alimentation amont et d'une sortie pour l'évacuation des vapeurs.

Dans un autre mode d'exécution, le dispositif de préconditionnement comporte un séchoir à air chaud équipé d'un tapis à bande traversé par l'air chaud.

Avantageusement encore, le réacteur de pyrolyse comporte une enceinte fermée dont les parois sont en matériau réfractaire. En particulier, l'enceinte fermée en matériau réfractaire est reliée, via des vannes écluses, en entrée haute au dispositif de préconditionnement, et en sortie basse à un refroidisseur étanche destiné à refroidir en absence d'oxygène le coke résiduel.

L'enceinte fermée en matériau réfractaire pourra comporter éventuellement en partie haute une tubulure permettant d'injecter un gaz de réaction ou un gaz neutre.

De préférence aussi, les deux extrémités de la vis de transfert chauffée par effet Joule sont agencées à l'extérieur de l'enceinte fermée en matériau réfractaire, lesdites extrémités étant refroidies avant d'être reliées aux moyens d'alimentation électrique associés de l'unité de puissance électrique.

Avantageusement encore, le piquage de sortie du réacteur de pyrolyse est relié au condenseur vertical par une conduite associée équipée sur toute sa longueur de moyens, électriques ou fluidiques, de maintien en température.

Il est par ailleurs intéressant de prévoir que le condenseur vertical est équipé intérieurement d'un faisceau de tubes verticaux dans lesquels circule un fluide réfrigérant.

De préférence encore, le condenseur vertical présente en partie haute une sortie pour l'évacuation des fractions non condensables des gaz de pyrolyse, cette sortie étant reliée par une conduite associée à un foyer de combustion. En particulier, la conduite menant au foyer de combustion inclut un ventilateur extracteur fonctionnant en aspiration et réglé pour maintenir une dépression dans le réacteur de pyrolyse. La conduite précitée menant au foyer de combustion peut enfin être équipée, en amont du ventilateur extracteur, d'un dévésiculeur.

D'autres caractéristiques et avantages de l'invention apparaîtront plus clairement à la lumière de la description qui va suivre, en référence aux dessins annexés, concernant un mode d'exécution particulier du procédé de l'installation de densification énergétique conforme à l'invention.

### BREVE DESCRIPTION DES DESSINS

Il sera fait référence aux figures des dessins annexés où :
- la figure 1 illustre schématiquement une installation de densification énergétique, mettant en oeuvre le procédé de l'invention et ;
- la figure 2 illustre une variante de l'installation précédente, utilisant un autre type de dispositif de préconditionnement.

### DESCRIPTION DETAILLEE DE L'INVENTION

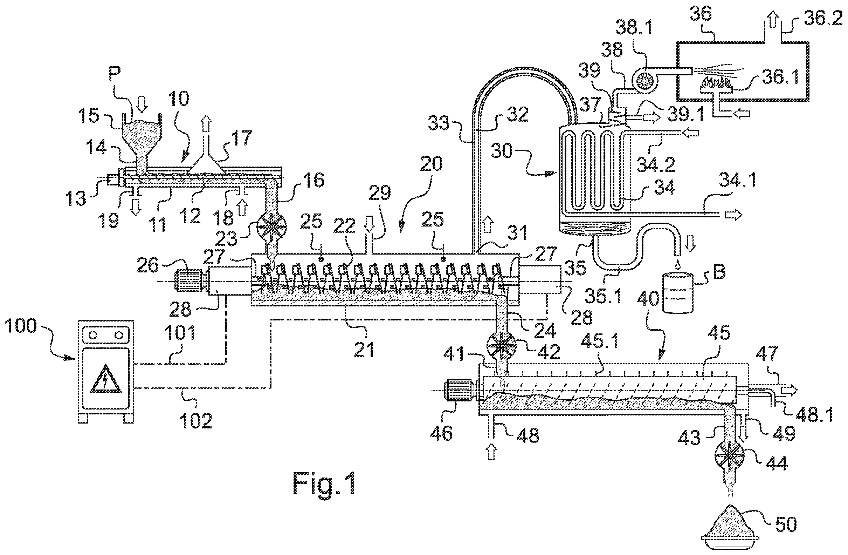

La figure 1 illustre schématiquement une installation (1) permettant de traiter un produit sous formes de solides divisés, en particulier une biomasse, avec une densification énergétique de ce produit en vue de l'obtention d'huiles pyrolytiques à vocation énergétique.

Le produit concerné sera en général une biomasse, ce terme recouvrant les fractions biodégradables des produits, déchets et résidus provenant de l'agriculture, de la sylviculture et des industries connexes, avec en particulier des biomasses d'origine végétale ou des parties solides de boues de station d'épuration, ainsi que les fractions biodégradables des déchets industriels et municipaux. L'invention pourra cependant être applicable au traitement d'autres déchets industriels ne rentrant pas dans la définition précitée de la biomasse, par exemple des déchets polymériques (matières plastiques, caoutchoucs, ...).

D'une façon générale, les produits concernés sont des solides divisés capables de produire des huiles pyrolytiques lorsqu'ils sont portés à des températures de 300°C à 800°C en l'absence d'oxygène, ces huiles ayant un contenu énergétique ou chimique susceptible d'être valorisé.

Le produit à traiter noté(P) est tout d'abord introduit dans un dispositif de préconditionnement (10) permettant de chauffer et sécher ce produit à des valeurs prescrites de température et d'humidité relative.

Le dispositif de préconditionnement (10) comporte une auge à double enveloppe (11) parcourue par un fluide chaud, le circuit fluidique associé ayant une entrée (18) et une sortie (19). Une vis de transfert (12) est montée pour tourner dans l'auge à double enveloppe (11), en étant entraînée par une motorisation extérieure associée (13). L'auge à double enveloppe (11) présente une entrée (14) raccordée à une trémie d'alimentation (15). Le produit (P) est chargé et stocké dans cette trémie (15), laquelle pourra être munie d'un capteur de niveau (haut et bas) et d'un système de dévoûtage mécanique afin d'éviter le talutage et les phénomènes de voûtage qui empêcheraient l'évacuation du produit.

De façon importante, le produit (P) stocké sera choisi pour présenter une granulométrie faible, comprise entre 10µm et 1mm, et de préférence entre 100µm et 300µm, et une humidité relative également faible, comprise entre 1% et 12%, de préférence entre 5% et 10%.

Le choix de ces critères de granulométrie et d'humidité garantit que le produit est idéalement conditionné en vue d'une pyrolyse aussi rapide que possible.

La vis doseuse (12) du dispositif de préconditionnement (10), de type double enveloppe parcourue par un fluide chaud, permet d'assurer à la fois le transport à vitesse constante et régulée dans le réacteur de pyrolyse (20)qui est relié en aval audit dispositif de préconditionnement, ceci grâce à un variateur de fréquence, ainsi qu'un chauffage et un séchage du produit qui sont assurés par le passage du fluide caloporteur dans la double enveloppe.

Grâce à ce dispositif de préconditionnement, le produit est porté à une température voisine de 100°C, avec une humidité relative n'excédant pas environ 10%, ce qui permet au produit d'entrer déjà chaud dans le réacteur de pyrolyse, favorisant alors grandement la montée en température dudit produit. Il faut en effet rappeler que la vitesse de montée en température est essentielle lors de la réaction de pyrolyse pour augmenter la teneur en huiles produites, et cette vitesse sera d'autant plus favorisée que le produit sera chaud et sec, avec des valeurs de plusieurs centaines de degrés par seconde.

L'auge à double enveloppe (11) est également équipée, en partie haute, d'une sortie (17) permettant l'évacuation des vapeurs, cette sortie pouvant être équipée d'un extracteur de type ventilateur non représenté ici.

Il faudra cependant veiller à ce que la température du produit dans l'auge à double enveloppe (11) ne soit pas trop importante, afin de ne pas démarrer prématurément la réaction de transformation de la matière dans cette zone de l'installation, avant que celle-ci ne pénètre dans le réacteur de pyrolyse. Le produit entrant dans le réacteur de pyrolyse sera donc à une température d'environ 100°C, et à une humidité relative n'excédant pas environ 10%, et de préférence comprise en 5% et 7%.

Le produit ainsi chauffé et séché dans le dispositif de préconditionnement (10)sort dudit dispositif par une sortie (16)) pour pénétrer dans un réacteur de pyrolyse (20), dont l'entrée est reliée de façon étanche à la sortie du dispositif de préconditionnement (10). L'étanchéité est en l'espèce assurée par une vanne écluse (23) .

Le réacteur de pyrolyse (20) est équipé d'au moins une vis de transfert (22) chauffée par effet Joule, ladite vis assurant à la fois le transfert et le chauffage du produit circulant dans ledit réacteur. Le réacteur de pyrolyse (20) comporte une enceinte fermée (21), dont les parois sont de préférence en matériau réfractaire.

La vis ici unique de transfert (22) chauffée par effet Joule entraîne ainsi le produit de l'amont vers l'aval, les conditions de pyrolyse étant calées à la fois à un niveau de température compris entre 300°C et 850°C, et avec un temps de séjour dans le réacteur qui sera fonction du produit, en particulier compris entre quelques secondes et quelques dizaines de minutes.

On sait que la rapidité de la pyrolyse favorise, par dégradation de la lignine contenue dans la biomasse, la formation de groupements phénoliques de haut poids moléculaire (au moins 300 Dalton) correspondant en même temps à des molécules à plus fort pouvoir calorifique inférieur recherché dans cette application. A l'inverse, une montée en température lente, de quelques degrés par seconde, et donc un temps de séjour relativement long du produit dans le réacteur de pyrolyse pourrait favoriser la formation d'acide acétique, ce qui pourrait contribuer à modifier la dégradation de la lignine en groupements phénoliques de plus petit poids moléculaire (inférieur à 300 Dalton), à pouvoir calorique inférieur moins élevé mais à puissance aromatique plus intéressante, ce qui explique le choix de ce type de conditions opératoires lors de la production d'arômes de fumées (fumées liquides) par pyrolyse lente de sciures de bois, comme rappelé plus haut.

Ainsi, dans le cadre de cette pyrolyse, le produit est progressivement chauffé jusqu'à une température comprise entre 300°C et 850°C, avec un temps de séjour dans le réacteur de pyrolyse (20) par exemple compris entre quelques secondes et quelques dizaines de minutes.

Les deux extrémités (27) de la vis chauffante (22) se prolongent à l'extérieur de l'enceinte fermée (21) en matériau réfractaire, et ces extrémités sont refroidies avant d'être reliées aux moyens d'alimentation électrique associés au niveau de blocs (28) représentés ici schématiquement. Les deux extrémités de l'axe de la spire traversant les parois réfractaires sont ainsi refroidies avant d'être reliées chacune à des moyens de connexion aux bornes d'un courant électrique. La température de l'axe devant être ramenée en dessous de 100°C, on utilisera de préférence une série d'ailettes de refroidissement à air fixées sur l'axe, ou des moyens de refroidissement par fluide liquide. Les deux extrémités de l'axe de la spire sans âme sont quant à elles reliées à un ensemble balais porte-balais permettant le raccordement aux deux polarités d'un courant électrique, alternatif ou redressé, basse tension et forte intensité. La puissance du courant traversant les spires sera régulée par un gradateur électronique à thyristor en fonction de la température souhaitée et programmée sur les spires. Une des extrémités de l'axe de la vis chauffante (22) est ainsi reliée à un ensemble moto-réducteur et moteur, schématisé ici en (26), commandé par un variateur de fréquence, afin d'ajuster la vitesse de rotation de la vis en fonction du temps de séjour souhaité et programmé pour le produit.

Conformément une caractéristique du procédé de l'invention, la puissance électrique qui assure le chauffage par effet Joule est régulée en fonction du produit pour maintenir le niveau thermique désiré pendant la totalité du temps de séjour du produit dans le réacteur (20), et aussi pour atteindre un seuil d'autothermicité.

Une telle régulation électrique est très simple à mettre en oeuvre avec des capteurs de température, et elle permet de minimiser considérablement la consommation d'énergie, car on se contente de maintenir le niveau thermique lors du traitement.

Ainsi, une unité de puissance électrique, représentée ici par une armoire (100), reliée aux différents organes de commande et aux différents capteurs, permet d'assurer le pilotage de l'ensemble. On a illustré ici schématiquement, en trait mixte, deux de ces liaisons, notées 101, 102. Des capteurs de température seront disposés le long de l'enceinte en matériau (21) réfractaire, afin de mesurer la température régnant à l'intérieur de ladite enceinte sur toute la longueur de celle-ci. On a représenté ici deux tels capteurs (25), servant à mesurer la température du « ciel » de l'enceinte. L'enceinte fermée (21) en matériau réfractaire comporte également ici, en partie haute, une tubulure (29) permettant d'injecter un gaz de réaction ou un gaz neutre tel que de l'azote, en cas de dépassement d'une valeur prédéterminée, le dispositif de sécurité d'injection de gaz étant relié à la mesure de température du ciel du four. Il sera en général également prévu un dispositif de mesure de température du produit le long de sa progression dans le four, afin d'enregistrer les profils de température au cours de la réaction de pyrolyse, ainsi qu'un dispositif de mesure de température des spires, puisque c'est elle qui assure la régulation de la puissance électrique, et donc de chauffe des spires en fonction d'une valeur prédéterminée et paramétrée.

L'enceinte fermée (21) qui est constituée, avec son capotage, en matériau réfractaire (par exemple ciment réfractaire ou céramique réfractaire), permet d'obtenir un chauffage optimal du produit par la vis chauffante (22) à une température telle que l'effet de chauffage en retour du réfractaire sur le produit par convection et par rayonnement contribue, en supplément du chauffage direct du produit pas la vis elle-même, à un chauffage immédiat, rapide et intense des particules de biomasse.

Le démarrage de l'installation se fera de préférence sans préchauffage du four de manière à éviter les risques d'inflammation de la biomasse divisée et déjà chaude dès son introduction dans le four. Le chauffage du four se fait alors que le produit commence à circuler dans celui-ci de sorte qu'il en découle un appauvrissement en oxygène de l'air ambiant à l'intérieur du four au fur et à mesure que la biomasse subit l'effet de la température et commence sa décomposition thermique. L'atmosphère du four s'appauvrissant en oxygène, jusqu'à un taux résiduel d'environ 5%, permet d'avoir les conditions d'une pyrolyse de la biomasse en toute sécurité. Ces conditions sont également favorables à la formation prépondérante d'huiles pyrolytiques à fort pouvoir calorifique inférieur.

Conformément à une autre caractéristique du procédé de l'invention, il est prévu une extraction des gaz de pyrolyse en partie haute du réacteur (20) de pyrolyse, en vue de leur condensation rapide dans un condenseur vertical (30).

L'expression « gaz de pyrolyse » utilisée ici englobe naturellement comme chacun sait un mélange mixte huiles, eau, et gaz incondensables.

Il est ainsi prévu un condenseur vertical (30), dont l'entrée est reliée à un piquage de sortie (31) du réacteur de pyrolyse (20), ce condenseur vertical permettant de condenser les fractions condensables d'une partie des gaz de pyrolyse, ledit condenseur présentant une sortie (35) en partie basse permettant de récupérer les huiles pyrolytiques obtenues. Le piquage de sortie (31) du réacteur de pyrolyse (20) sera de préférence positionné, en partie latérale, dans la dernière partie du réacteur de pyrolyse (20).

Il est par ailleurs intéressant que l'extraction des gaz de pyrolyse s'effectue avec un maintien en température jusqu'à leur arrivée dans le condenseur vertical (30). En effet, le maintien des gaz de pyrolyse à une température au moins équivalente à celle régnant dans le ciel du four permet d'éviter tout risque de condensation prématurée des huiles. La distance entre la sortie des gaz du four et l'entrée du condenseur vertical doit également être la plus courte possible, afin d'éviter la stagnation de poussières dans cette zone, ce qui pourrait entraîner la formation de dépôts, et le rétrécissement du diamètre du piquage (31). La liaison entre le réacteur de pyrolyse (20) et le condenseur vertical (30) est assurée en l'espèce par une conduite associée (32) équipée sur toute sa longueur de moyens (33), électriques ou fluidiques, de maintien en température. Ces moyens (33) peuvent être un traçage électrique ou une isolation fluidique assurant le maintien en température désiré. On est ainsi assuré d'éviter une condensation prématurée des huiles générant des goudrons.

Cette partie des gaz de pyrolyse est refroidie rapidement dès leur entrée dans le condenseur vertical (30) par le passage desdits gaz entre des tubes (34) dans lesquels circule un fluide réfrigérant, par exemple à une température d'environ 0°C. L'entrée du circuit de fluide réfrigérant est notée (34.2), et la sortie (34.1). De préférence, la partie concernée des gaz de pyrolyse entre directement en partie basse et latérale du condenseur vertical (30).

Il est alors particulièrement intéressant que le condenseur vertical (30) soit équipé d'un faisceau de tubes verticaux (34), de façon que le ruissellement des condensats réalise un nettoyage desdits tubes.

Le refroidissement rapide des fumées est en effet très important pour réaliser une condensation rapide. A ce titre, la disposition verticale du condenseur est ainsi intéressante car elle permet l'avantage de l'auto-nettoyage des tubes par ruissellement des condensats, les phases liquides à faible viscosité condensant à plus basse température, et donc en partie supérieure des tubes, nettoyant et dissolvant les molécules plus lourdes à plus forte viscosité et ayant condensé en partie basse des tubes. En bas du condenseur vertical (30), on trouve les fractions lourdes qui condensent rapidement à haute température.

On aura compris que la condensation rapide de cette partie des gaz de pyrolyse est importante, ceci pour éviter la recombinaison.

Parallèlement à la condensation des fractions condensables des gaz de pyrolyse en vue de la récupération des huiles pyrolytiques obtenues, il est prévu une évacuation des fractions non condensables (constituées de gaz et éventuellement de gouttes d'huile) au niveau d'une sortie haute (37) du condenseur vertical (30). Cette sortie (37) est reliée par une conduite associée (38) à un foyer de combustion (36). La conduite (38), partant avantageusement latéralement et en partie supérieure du condenseur (30), permet ainsi d'évacuer les fractions non condensables des fumées, ces fractions pouvant représenter entre 5 et 15% en masse du débit de biomasse traitée. La conduite (38) menant au foyer de combustion (36) inclut un ventilateur extracteur (38.1) fonctionnant en aspiration et réglé pour maintenir en dépression le réacteur de pyrolyse (20). Ceci permet de réaliser une extraction forcée des fractions non condensables des fumées. On pourra éventuellement prévoir, en amont du ventilateur extracteur (38.1), un dévésiculeur (39) permettant le piégeage des vésicules d'huile qui n'auraient pas condensé. Ce dévésiculeur (39) permet ainsi d'éliminer et de recueillir au maximum les vésicules ou gouttelettes d'huile éventuellement encore présentes. Le dévésiculeur (39) présente à cet effet ici une sortie (39.1) permettant de recueillir les vésicules ou gouttelettes d'huile. En sortie du ventilateur extracteur (38.1), les gaz sont envoyés dans le foyer de combustion (36), dans lequel la combustion est entretenue par des brûleurs (36.1) à gaz, fioule ou biomasse, permettant la combustion complète des gaz du process. L'évacuation des fumées de combustion se fait en sortie haute par une cheminée d'évacuation (36.2) du foyer.

Les conditions à retenir pour garantir la combustion complète des gaz ainsi que leur désodorisation sont à la fois une température de traitement de l'ordre de 850°C, et un temps de séjour dans le foyer de combustion de l'ordre de 2 secondes.

En partie basse du condenseur vertical (30), on pourra installer un manchon équipé d'une vanne (non représenté ici), relié à une cuve de récupération des huiles pyrolytiques, ce qui est schématisé en l'espèce par un circuit (35.1). Avantageusement, le bas du condenseur vertical (30) disposera d'un volume mort permettant la rétention des huiles le temps du chargement, lequel s'opère après fermeture de la vanne d'isolation de la cuve. La température des huiles ainsi récupérées et stockées dans des bidons (B) sera située entre 40°C et 80°C. Dans la pratique, avant de conditionner en finale les huiles dans des bidons (B), on procèdera à un filtrage de ces huiles au travers d'un filtre (non représenté ici) d'environ 5 micromètres.

Le condenseur vertical (30) pourra être équipé d'un système de pulvérisation (non représenté ici) pour assurer par l'intermédiaire d'un fluide liquide, le nettoyage des tubes. Ce fluide de nettoyage pourra être de l'eau additivée de soude pour un cycle de nettoyage distinct de la phase de production. Dans un autre mode de fonctionnement, on pourra opter pour le choix de pulvériser directement une partie des huiles condensées et froides. Cette opération pourra alors être effectuée en continu pendant la phase de production.

Il est par ailleurs prévu une sortie des produits issus de la pyrolyse, qui sont restés sous forme solide, en général sous forme de coke (ou char) résiduel.

En l'espèce, on a prévu une sortie (24) du réacteur de pyrolyse (20) reliée, via une vanne écluse (42), à l'entrée (41) d'un refroidisseur étanche (50).

Le refroidisseur étanche (40) est équipé intérieurement d'une vis à double enveloppe (45), garnie extérieurement d'ailettes de transfert (45.1), cette vis double enveloppe étant entraînée en rotation par un moteur extérieur (46), avec un passage de fluide (eau ou huile sous pression) permettant un refroidissement rapide (en quelques minutes) du coke. Le circuit de fluide réfrigérant associé est illustré schématiquement avec des entrées (48) et (48.1) et une sortie (49). Les gaz s'échappent quant à eux par une sortie aval (47). Les entrées (48) et (48.1) sont de préférence reliées directement à la sortie (34.1) du condenseur vertical (30), et la sortie (47) est de préférence reliée, via une unité de réfrigération (non représentée sur la figure 1), à l'entrée (34.2) du condenseur vertical (30).

Ceci permet ainsi de refroidir le coke résiduel, en l'absence d'oxygène, jusqu'à une température n'excédant pas 50°C, ce qui permet d'évacuer le coke vers l'extérieur en toute sécurité. L'évacuation se fait par une sortie basse (43) du refroidisseur étanche (40), via une vanne écluse (44), pour produire un tas résiduel récupérable (50) de biochar ou analogue. A titre indicatif, la proportion en coke représentera environ 1 à 25% en masse de la biomasse traitée.

L'étanchéité entre les gaz contenus dans le process et l'air extérieur est ainsi parfaitement assurée par les vannes écluses (42 et 44), ce qui garantit l'étanchéité nécessaire à la sécurité, en évitant la présence d'oxygène qui risquerait de provoquer une explosion.

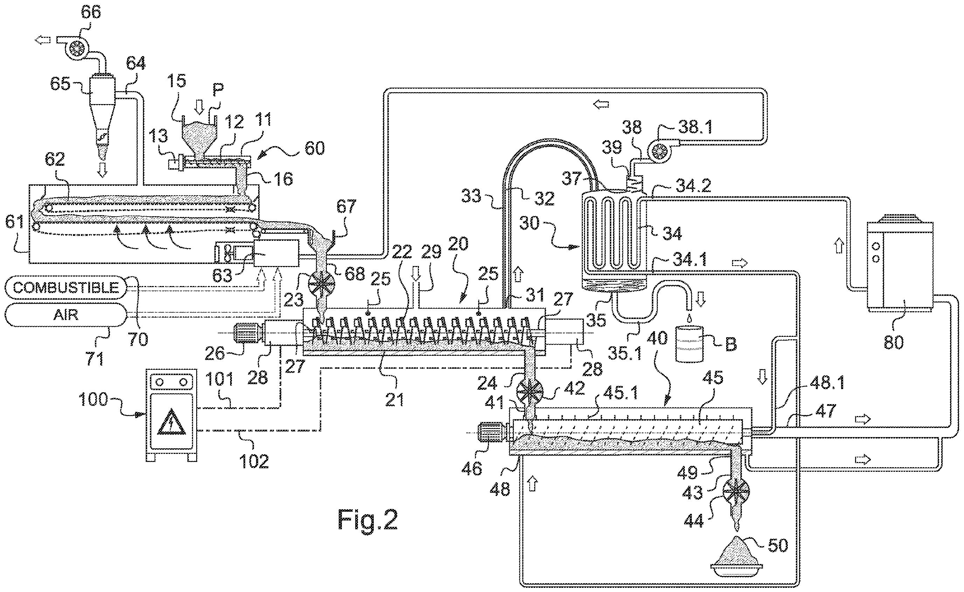

La figure 2 illustre une variante de l'installation de la figure 1, dans laquelle le dispositif de préconditionnement (60) comporte un séchoir à air chaud (61) équipé d'un tapis à bande (62) traversé par l'air chaud.

La sortie (16) de l'auge d'amenée (11) débouche maintenant en entrée de l'enceinte du séchoir à air chaud (61), lequel est équipé d'un tapis (62) à bande transportée dont la longueur sera fonction de la capacité de traitement du procédé. Le tapis (62), ici agencé en deux étages superposés, est à mailles ouvertes (par exemple des mailles de 2 à 5 mm) pour permettre le passage de l'air chaud qui sert à chauffer et sécher le produit à traiter. L'air chaud, émis par une unité de soufflage (63), est à une température d'environ 140°C, et il traverse alors successivement les deux étages de tapis, se chargeant ainsi de l'humidité contenue dans le produit. Une sortie (64) en partie haute de l'enceinte du séchoir (61) permet d'évacuer cet air chaud chargé d'humidité vers un cyclone (65), l'extraction étant assurée par un ventilateur extracteur (66).

En sortie du séchoir à air chaud (61), le produit passe sur un tapis de convoyage pour arriver dans une trémie (67) dont la sortie (68) arrive en entrée de la vanne écluse (23) de l'installation de la figure 1.

On a par ailleurs prévu un recyclage des gaz incondensables sortis du condenseur vertical (30) par le circuit (38), via le dévésiculeur (39) et le ventilateur extracteur (38.1), directement en entrée de l'unité de soufflage (63) : ces gaz incondensables sont ainsi valorisés en étant utilisés comme combustible connexe du brûleur de l'unité de soufflage d'air chaud, lequel brûleur est déjà alimenté en combustible (gaz ou fioul) et en air par des sources associées (70,71).

La figure 2 permet par ailleurs de mieux distinguer les circuits de fluide et de gaz associés au condenseur vertical (30) et au refroidisseur étanche (40), avec son unité de réfrigération ou groupe froid (80).

On est ainsi parvenu à réaliser un procédé et une installation de densification énergétique de biomasse ou autres déchets, en vue de l'obtention d'huiles pyrolytiques à vocation énergétique, qui permettent à la fois de mettre en oeuvre les conditions d'une pyrolyse très rapide et d'avoir un rendement élevé pour l'obtention d'huiles pyrolytiques, en particulier un rendement atteignant couramment 60 à 75% d'huiles, et avec un niveau élevé de pouvoir calorifique inférieur (entre 4000 et 7000kcal/kg), et ce malgré un volume faible, compétitif et avec un coût de production très raisonnable (grâce à la régulation électrique). On pourra alors traiter environ une tonne de produit par heure.

En outre, l'installation générale est de structure relativement simple, dans la mesure où ses composants sont connus isolément dans leur structure générale, et on évite aussi les inconvénients précités de certaines techniques antérieures de pyrolyse qui utilisent des courants d'air et de sable chaud.

Les biomasses concernées seront dans la pratique choisies en fonction des huiles pyrolytiques que l'on désire obtenir, les spécificités de ces huiles décidant de leur application ultérieure, pour chauffer, pour alimenter des moteurs thermiques, pour la chimie verte, ou pour fractionner, etc.

Le procédé de l'invention permet ainsi d'ouvrir la voie à un développement dont les perspectives sont très intéressantes dans le cadre des énergies renouvelables et des biocarburants.

L'invention n'est pas limitée au mode de réalisation qui vient d'être décrit, mais englobe au contraire toute variante reprenant, avec des moyens équivalents, les caractéristiques énoncées plus haut.

Ainsi par exemple, on pourra prévoir d'assurer l'alimentation électrique de la vis chauffante par un groupe électrogène, lui-même alimenté par la biomasse, ou encore au moyen de panneaux solaires (auto-alimentation intéressante sur des sites isolés ou désertiques).

On pourra également remplacer la vis chauffante par un tube vibré lui aussi chauffé par effet Joule, le transfert du produit s'effectuant alors dans un tube hélicoïdal d'axe vertical (variante non illustrée ici).

## Revendications

1. Procédé de densification énergétique d'un produit sous forme de solides divisés, en particulier une biomasse, en vue de l'obtention d'huiles pyrolytiques à vocation énergétique ayant des valeurs de pouvoir calorifique inférieur comprises entre 4000 et 7000 kilocalories par kilogramme, **caractérisé en ce qu'**il comporte les étapes successives suivantes :
- préconditionnement du produit (P) par chauffage et séchage, afin de porter ledit produit à une température voisine de 100°C et à une humidité relative n'excédant pas environ 10 % dans un dispositif de préconditionnement (10) ;
- pyrolyse du produit amené ensuite à circuler dans un réacteur de pyrolyse sensiblement hermétique (20), dont l'entrée est reliée de façon étanche à la sortie du dispositif de préconditionnement, ledit réacteur contenant au moins une vis de transfert ou un tube vibré (22) chauffé par effet Joule, ledit produit étant progressivement chauffé jusqu'à une température comprise entre 300°C et 850°C avec une vitesse de montée en température de plusieurs centaines de degrés par seconde, la puissance du courant électrique traversant la vis de transfert ou le tube vibré (22) pour assurer le chauffage par effet Joule étant régulée en fonction du produit pour maintenir le niveau thermique désiré pendant le temps de séjour dudit produit dans ledit réacteur ;
- extraction des gaz de pyrolyse en partie haute du réacteur (20) en vue de leur condensation rapide dans un condenseur vertical (30) ; et
- récupération des huiles pyrolytiques en partie basse du condenseur vertical (30).

2. Procédé selon la revendication 1, **caractérisé en ce que** le temps de séjour du produit dans le réacteur de pyrolyse (20) est compris entre quelques secondes et quelques dizaines de minutes.

3. Procédé selon la revendication 1, **caractérisé en ce que**, avant l'étape de préconditionnement, le produit sous forme de solides divisés (P) est stocké avec une granulométrie comprise entre 10 µm et 1mm, de préférence entre 100 µm et 300 µm, et à une humidité relative comprise entre 1% et 12%, de préférence entre 5% et 10%.

4. Procédé selon la revendication 3, **caractérisé en ce que** l'extraction des gaz de pyrolyse s'effectue dans la dernière partie du réacteur (20) par référence au sens de circulation du produit (P), avec un maintien en température jusqu'à leur arrivée dans le condenseur vertical (30).

5. Procédé selon la revendication 4, **caractérisé en ce que** les gaz de pyrolyse sont refroidis rapidement dès leur entrée dans le condenseur vertical (30), par le passage desdits gaz entre des tubes (34) dans lesquels circule un fluide réfrigérant à une température d'environ 0°C.

6. Procédé selon la revendication 5, **caractérisé en ce que** les gaz de pyrolyse passent entre un faisceau de tubes verticaux (34), de façon que le ruissellement des condensats réalise un nettoyage desdits tubes.

7. Procédé selon la revendication 5, **caractérisé en ce qu'**il comporte l'évacuation, en partie haute du condenseur vertical (30), des fractions non condensables des gaz de pyrolyse, en vue de la combustion rapide desdites fractions dans un foyer de combustion (36), ou en vue de leur recyclage dans un séchoir à air chaud (61) assurant le préconditionnement du produit.

8. Procédé selon la revendication 7, **caractérisé en ce que** l'évacuation des fractions non condensables s'effectue par extraction forcée, via un dévésiculeur (39).

9. Procédé selon l'une des revendications 1 à 8, **caractérisé en ce qu'**il comporte également l'extraction, en sortie du réacteur (20) et en partie basse de celui-ci, du coke résiduel, en vue du refroidissement dudit coke, en l'absence d'oxygène, dans un refroidisseur étanche (40).

10. Procédé selon la revendication 9, **caractérisé en ce que** le coke résiduel est refroidi progressivement dans le refroidisseur étanche (40), pour sortir de celui-ci sous forme de biochar ou analogue à une température n'excédant pas environ 50°C.

## Patentansprüche

1. Verfahren zur Energieverdichtung eines Produktes in Form von geteilten Feststoffen, insbesondere einer Biomasse, zwecks Erhalts von pyrolytischen Ölen für Energiezwecke, die untere spezifische Heizwerte zwischen 4000 und 7000 Kilokalorien pro Kilogramm haben, **dadurch gekennzeichnet, dass** es die folgenden aufeinanderfolgenden Schritte umfasst:
- Vorbehandlung des Produktes (P) durch Erwärmen und Trocknen, um das genannte Produkt in einer Vorbehandlungsvorrichtung (10) auf eine Temperatur nahe 100°C und eine relative Feuchtigkeit, die ungefähr 10% nicht übersteigt, zu bringen;
- Pyrolyse des Produktes, das anschließend in einem im Wesentlichen luftdichten Pyrolysereaktor (20) zum Zirkulieren gebracht wird, dessen Eingang auf dichte Weise mit dem Ausgang der Vorbehandlungsvorrichtung verbunden ist, wobei der Reaktor mindestens eine Förderschnecke oder ein vibrierendes Rohr (22) umfasst, das mittels Joule-Effekt erwärmt wird, wobei das Produkt fortschreitend bis auf eine Temperatur zwischen 300°C und 850°C mit einer Temperaturanstiegsgeschwindigkeit von mehreren Hundert Grad pro Sekunde erwärmt wird, wobei die Leistung des elektrischen Stroms, der die Förderschnecke oder das vibrierende Rohr (22) durchströmt, um die Erwärmung mittels Joule-Effekt sicherzustellen, in Abhängigkeit des Produktes reguliert wird, um das gewünschte thermische Niveau während der Verweilzeit des Produktes in dem Reaktor aufrechtzuerhalten;
- Extraktion der Pyrolysegase im oberen Teil des Reaktors (20) zwecks deren schneller Kondensation in einem vertikalen Kondensator (30); und
- Rückgewinnung der pyrolytischen Öle im unteren Teil des vertikalen Kondensators (30).

2. Verfahren nach Anspruch 1, **dadurch gekennzeichnet, dass** die Verweilzeit des Produktes in dem Pyrolysereaktor (20) zwischen einigen Sekunden und einigen zehn Minuten ist.

3. Verfahren nach Anspruch 1, **dadurch gekennzeichnet, dass** das Produkt in Form von geteilten Feststoffen (P) vor dem Vorbehandlungsschritt mit einer Korngröße zwischen 10 µm und 1mm, vorzugweise zwischen 100 µm und 300 µm, und mit einer relativen Feuchtigkeit zwischen 1% und 12%, vorzugsweise zwischen 5% und 10%, gelagert wird.

4. Verfahren nach Anspruch 3, **dadurch gekennzeichnet, dass** die Extraktion der Pyrolysegase in dem letzten Teil des Reaktors (20) in Bezug auf die Zirkulationsrichtung des Produktes (P) erfolgt, mit einer Temperaturhaltung bis zu ihrer Ankunft in dem vertikalen Kondensator (30).

5. Verfahren nach Anspruch 4, **dadurch gekennzeichnet, dass** die Pyrolysegase ab ihrem Eintritt in den vertikalen Kondensator (30) durch den Durchlauf der genannten Gase zwischen Rohren (34), in denen ein Kühlfluid mit einer Temperatur von ungefähr 0°C zirkuliert, schnell abgekühlt werden.

6. Verfahren nach Anspruch 5, **dadurch gekennzeichnet, dass** die Pyrolysegase zwischen einem Bündel aus vertikalen Rohren (34) hindurchströmen, derart, dass das Abrieseln der Kondensate eine Reinigung der genannten Rohre bewirkt.

7. Verfahren nach Anspruch 5, **dadurch gekennzeichnet, dass** es im oberen Teil des vertikalen Kondensators (30) das Abführen der nicht-kondensierbaren Anteile der Pyrolysegase umfasst, zwecks schneller Verbrennung der genannten Anteile in einem Feuerraum (36) oder zwecks Rückführung in einen Heißlufttrockner (61), der die Vorbehandlung des Produktes sicherstellt.

8. Verfahren nach Anspruch 7, **dadurch gekennzeichnet, dass** das Abführen der nicht-kondensierbaren Anteile durch erzwungene Extraktion über einen Tropfenabscheider (39) erfolgt.

9. Verfahren nach einem der Ansprüche 1 bis 8, **dadurch gekennzeichnet, dass** es ferner am Ausgang des Reaktors (20) und im unteren Teil desselben die Extraktion des Restkoks umfasst, zwecks Kühlens des genannten Koks in Abwesenheit von Sauerstoff in einer abgedichteten Kühlvorrichtung (40).

10. Verfahren nach Anspruch 9, **dadurch gekennzeichnet, dass** das Restkoks fortschreitend in der abgedichteten Kühlvorrichtung (40) abgekühlt wird, um aus derselben in Form von Biokohle oder dergleichen mit einer Temperatur, die ca. 50°C nicht überschreitet, auszutreten.

## Claims

1. A method of energy densification for a material in the form of divided solids, in particular a biomass, for the purpose of obtaining pyrolytic oils for energy purposes, that have high net calorific value in the range 4000 kilocalories per kilogram to 7000 kilocalories per kilogram the method being **characterized in that** it comprises the following successive steps:
• preconditioning the material (P) by heating and drying in order to raise said material to a temperature close to 100°C and to relative humidity not exceeding about 10% in a preconditioning device (10);
• pyrolyzing the material that is subsequently caused to flow through a substantially hermetic pyrolytic reactor (20) the inlet of the reactor being connected in leaktight manner to the outlet from the preconditioning device, the reactor containing at least one transfer screw or vibrating tube (22) heated by the Joule effect, said material being heated progressively up to a temperature lying in the range 300°C to 850°C with a fast temperature rise of several hundreds of degrees Celsius per second, the electrical power passing through the transfer screw or the vibrating tube (22) for providing heating by the Joule effect being regulated as a function of the material in order to obtain the desired temperature level during the transit time of said material through said reactor;
• extracting pyrolysis gas from a high portion of the reactor (20) for rapid recondensation thereof in a vertical condenser (30); and
• recovering pyrolytic oils from a low portion of the vertical condenser (30).

2. A method according to claim 1, **characterized in that** the transit time of the material in the pyrolysis reactor (20) lies in the range a few seconds to a few tens of minutes.

3. A method according to claim 1, **characterized in that**, prior to the preconditioning step, the material (P) in the form of divided solids is stored with a grain size lying in the range 10 µm to 1 mm, preferably in the range 100 µm to 300 µm, and at relative humidity lying in the range 1% to 12%, and preferably in the range 5% to 10%.

4. A method according to claim 3, **characterized in that** pyrolytic gas extraction is performed in the last portion of the reactor (20) relative to the travel direction of the material (P), with temperature being maintained until the gas reaches the vertical condenser (30).

5. A method according to claim 4, **characterized in that** the pyrolysis gas is cooled rapidly on entering into the vertical condenser (30) by said gas passing between tubes (34) having a refrigerant fluid flowing therethrough at a temperature of about 0°C.

6. A method according to claim 5, **characterized in that** the pyrolysis gas passes between a bundle of vertical tubes (34) so that the trickling of the condensates serves to clean said tubes.

7. A method according to claim 5, **characterized in that** it includes removing non-condensable fractions of the pyrolysis gas from the high portion of the vertical condenser (30) for the purpose of rapidly burning said fractions in a burner (36) or in order to recycle them in a hot air dryer (61) used for preconditioning the material.

8. A method according to claim 7, **characterized in that** the non-condensable fractions are removed by forced extraction via a droplet-remover (39).

9. A method according to any one of claims 1 to 8, **characterized in that** it also includes extracting the residual coke at the outlet from the reactor (20) in a low portion thereof for the purpose of cooling said coke in the absence of oxygen in a sealed cooler (40).

10. A method according to claim 9, **characterized in that** the residual coke is cooled progressively in the sealed cooler (40) so as to leave it in the form of biochar or the like at a temperature not exceeding about 50°C.
